# EUROPEAN PATENT APPLICATION

(11) **EP 3 425 894 A1**
(43) Date of publication of application: **09.01.2019**
(21) Application number: 18177717.8
(22) Date of filing: 14.06.2018
(51) Int. Cl.: H04N 1/32, H04N 1/327

(54) **METHOD FOR ESTABLISING WIRELESS NETWORK CONNECTION WITH IMAGE FORMING APPARATUS AND IMAGE FORMING APPARATUS**

(30) Priority: 05.07.2017 CN 201710543577
(71) Applicant: Zhuhai Seine Technology Co., Ltd., Zhuhai, Guangdong 519060 (CN)
(72) Inventor: ZHAO, Wei, Zhuhai, Guangdong (CN); ZHANG, Jun, Zhuhai, Guangdong (CN); WANG, Gang, Zhuhai, Guangdong (CN); TAN, Xuan, Zhuhai, Guangdong (CN); LI, Jiade, Zhuhai, Guangdong (CN)
(74) Representative: Sun, Yiming

(57) **Abstract**

The present disclosure provides a method for establishing network a connection with an image forming apparatus. The image forming apparatus obtains an operation instruction for generating configuration information of a wireless network connection; according to the operation instruction, generates the configuration information including SSID and a password of the wireless network ; in the process of generating the configuration information, generates activation information of the AP is also generated; activates the AP according to the activation information, such that the terminal device can establish the wireless network connection with the image forming apparatus according to the configuration information. Thus, the technical solution can be implemented for establishing the wireless network connection with the image forming apparatus whenever the terminal device needs to be wirelessly connected to the image forming apparatus. The power consumption of the image forming apparatus due to the long-term activation of the AP can be reduced, and it is also more convenient for users to use the image forming apparatus.

## Description

### TECHNICAL FIELD

The present disclosure relates to a network connection technology of an image forming apparatus and, more particularly, to a method for establishing a wireless network connection with an image forming apparatus and the image forming apparatus.

### BACKGROUND

A terminal device, via a wireless network module thereof, can establish a wireless network connection with an access point (AP) of an image forming apparatus to achieve wireless printing. However, if the wireless network module of the image forming apparatus is kept activated for a long time, the power consumption of the image forming apparatus can be increased. Therefore, in conventional technologies, when the image forming apparatus is in a standby status or just turned on, the AP usually is deactivated. In addition, for safety considerations, some users may not want the AP of the image forming apparatus to be discovered by other users, so the AP in the image forming apparatus is deactivated.

When the terminal device attempts to establish a wireless network connection with an image forming apparatus with a wireless network module, the wireless network connection may fail when the AP of the image forming apparatus is deactivated. Therefore, the user may mistakenly think that the wireless network module is damaged or may not realize that the AP of the image forming apparatus needs to be activated until the wireless network connection fails multiple times, causing unnecessary waste of time. Thus, the user experience may be affected.

### SUMMARY

The present disclosure provides a method for establishing a wireless network connection with an image forming apparatus and the image forming apparatus, so as to solve problems in conventional technologies that, when an access point (AP) of the image forming apparatus is kept activated for a long time, the power consumption of the image forming apparatus may increase; when the AP is deactivated and a terminal device attempts to establish a wireless network connection with the image forming apparatus, if the AP cannot be activate in time, the wireless network connection may fail and the user may be confused; and there is a dilemma between keeping the AP activated or deactivating the AP.

One aspect of the present disclosure provides a method for establishing a wireless network connection with an image forming apparatus, including following procedures. The image forming apparatus obtains an operation instruction for generating configuration information about a wireless network connection. According to the operation instruction, the image forming apparatus generates the configuration information including a service set identifier (SSID) and a password of a wireless network. In the process of generating the configuration information, the image forming apparatus generates activation information of a wireless AP in the image forming apparatus. After the image forming apparatus activates the AP based on the activation information, a terminal device is able to establish the wireless network connection with the image forming apparatus, based on the configuration information.

Optionally, the activation information may include one of information about the image forming apparatus automatically activating the AP, information about the image forming apparatus keeping the AP activated, and prompt information about reminding the user to activate the AP in the image forming apparatus.

Optionally, after the operation instruction for generating the configuration information about the wireless network connection is obtained, the method may include further procedures. The image forming apparatus inspects an AP status of the image forming apparatus according to the operation instruction. It can be determined whether the AP of the image forming apparatus is activated. Correspondingly, the generating activation information of a wireless AP in the image forming apparatus may include following options. When the AP of the image forming apparatus is activated, the image forming apparatus keeps the AP activated and generates the information about the image forming apparatus keeping the AP activated. when the AP of the image forming apparatus is deactivated, the image forming apparatus automatically actives the AP of the image forming apparatus and generates the information about automatically activating the AP. Optionally, when the AP of the image forming apparatus is deactivated, the image forming apparatus may keep the AP deactivated and generates the prompt information about reminding the user to activate the AP, so that the user can realize that the AP of the image forming apparatus needs to be activated.

Optionally, the method may further include following procedures. According to a certain information page template, the image forming apparatus fills the configuration information and the activation information into the information page template to obtain a filled information page. The image forming apparatus prints information page, so that according to the configuration information and the activation information displayed on the information page, the terminal device can establish the wireless network connection with the image forming apparatus. Optionally, the image forming apparatus may encrypt the configuration information and the activation information, generate a two-dimensional barcode (QR code) including the encrypted configuration information and activation information, and display the QR code to the terminal device. Therefore, through scanning the QR code, the terminal device can obtain the configuration information and the activation information to establish the wireless network connection with the image forming apparatus.

Optionally, the method may further include: the image forming apparatus obtains the SSID and the password sent by the terminal, and if the SSID and the password sent by the terminal match the SSID and the password of the image forming apparatus, the image forming apparatus allows the terminal device to establish the wireless network connection with the image forming apparatus.

Another aspect of the present disclosure provides an image forming apparatus, including a receiving module, and a generating module. The receiving module may be configured to obtain an operation instruction for generating configuration information about a wireless network connection. The generating module may be configured to generate the configuration information including a SSID and a password of a wireless network according to the operation instruction, and in the process of generating the configuration information, generate activation information of a wireless AP in the image forming apparatus. After the image forming apparatus activates the AP based on the activation information, a terminal device, based on the configuration information, can establish the wireless network connection with the image forming apparatus.

Optionally, the activation information may include one of information about the image forming apparatus automatically activating the AP, information about the image forming apparatus keeping the AP activate, and prompt information about reminding the user to activate the AP in the image forming apparatus.

Optionally, the apparatus may further include an inspection module configured to inspect an AP status of the image forming apparatus according to the operation instruction; and a determining module configured to determine whether the AP of the image forming apparatus is activated. Correspondingly, the generating module may include a keeping-activated information generating module, an automatically-activating information generating module and a prompt-activating information generating module. The keeping-activated information generating module is configured to when the AP of the image forming apparatus is activated, keep the AP activated, and generate the information about the image forming apparatus keeping the AP activated. The automatically-activating information generating module is configured to automatically activate the AP of the image forming apparatus when the AP of the image forming apparatus is not deactivated, and generate the information about automatically activating the AP. The prompt-activating information generating module is configured to when the AP of the image forming apparatus is deactivated, keep the AP deactivated and generate the prompt information about reminding the user to activate the AP, so that the user can realize that AP of the image forming apparatus needs to be activated.

Optionally, the apparatus may further include one or more of a printing module and a QR code generating module. The printing module is configured to fill, according to a certain information page template, the configuration information and the activation information into the information page template to obtain a filled information page; and print the information page, so that a terminal device can establish the wireless network connection with the image forming apparatus, according to the configuration information and the activation information displayed on the information page. The QR code generating module is configured to encrypt the configuration information and the activation information, generate a QR code including the encrypted configuration information and the activation information, and display the QR code to the terminal device, such that through scanning the QR code, the terminal device can obtain the configuration information and the activation information to establish the wireless network connection with the image forming apparatus.

Optionally, the device may further include a judging module configured to obtain an SSID and a password sent by the terminal, and if the SSID and the password sent by the terminal match the SSID and the password of the image forming apparatus, allow the terminal device to establish the wireless network connection with the image forming apparatus.

According to the above technical solutions, the present disclosure provides the method for establishing a wireless network connection with the image forming apparatus and the image forming apparatus. Using this method, an operation instruction for generating configuration information of a wireless network connection can be obtained. According to the operation instruction, the configuration information including SSID and a password of the wireless network can be generated. During generating the configuration information, activation information of the AP may also be generated. Therefore, after the image forming apparatus activates the AP according to the activation information, the terminal device can establish the wireless network connection with the image forming apparatus according to the configuration information. Through the AP activation information provided by the image forming apparatus, the user may be reminded to activate the AP in the image forming apparatus to achieve the wireless network connection; the AP of the image forming apparatus with a deactivated AP can be automatically activated; or the activated AP of the image forming apparatus can be kept activated. Thus, the technical solution can be implemented for establishing the wireless network connection with the image forming apparatus whenever the terminal device needs to be wirelessly connected to the image forming apparatus. The power consumption of the image forming apparatus due to the long-term activation of the AP can be reduced, and it is also more convenient for users to use the image forming apparatus.

### DESCRIPTION OF THE DRAWINGS

In order to more clearly illustrate the embodiments of the present disclosure, the drawings are briefly described below. Obviously, the accompanying drawings described below illustrate only some embodiments of the present disclosure. For those skilled in the art, other drawings may also be obtained based on these drawings without creative efforts.
FIG. 1 is a flowchart of a method for establishing a wireless network connection with an image forming apparatus according to an embodiment of the present disclosure;
FIG. 2 is a flowchart of a method for establishing a wireless network connection with an image forming apparatus according to another embodiment of the present disclosure;
FIG. 3 is a schematic diagram of an information page for "Wi-Fi connecting by scanning code" of the method for establishing a wireless network connection with an image forming apparatus according to an embodiment of the present disclosure;
FIG. 4 is a schematic diagram of an information page for Wi-Fi connecting of the method for establishing a wireless network connection with an image forming apparatus according to an embodiment of the present disclosure;
FIG. 5 is a schematic diagram of speed connecting by scanning code of the method for establishing a wireless network connection with an image forming apparatus according to an embodiment of the present disclosure;
FIG. 6 is a schematic diagram of a code scanner of the method for establishing a wireless network connection with an image forming apparatus according to an embodiment of the present disclosure;
FIG. 7 is a schematic structural diagram of an image forming apparatus according to an embodiment of the present disclosure;
FIG. 8 is a schematic structural diagram of an image forming apparatus according to another embodiment of the present disclosure; and
FIG. 9 is a schematic structural diagram of an image forming apparatus according to another different embodiment of the present disclosure.

### DETAILED DESCRIPTION

To make objectives, technical solutions, and advantages of the embodiments of the present disclosure clearer, the following describes the technical solutions according to embodiments of the present disclosure with reference to the accompanying drawings. Obviously, embodiments described are a part of embodiments of the present disclosure, not all the embodiments. Other embodiments obtained by those skilled in the art based on the disclosed embodiments of the present disclosure without creative efforts shall fall within the scope of the present disclosure.

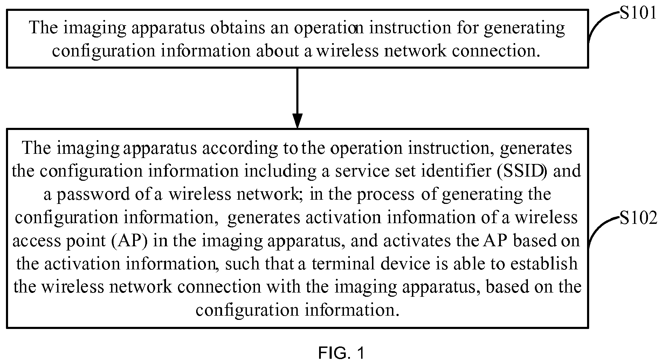

FIG. 1 is a flowchart of a method for establishing a wireless network connection with an image forming apparatus according to an embodiment of the present disclosure. The image forming apparatus according to embodiments of the present disclosure may include a printer, a copier, a fax machine, and a multi-function all-in-one printer, etc. A terminal device to establish the wireless network connection with the image forming apparatus may include a mobile terminal (e.g. a cellphone and a pad), and a computer, etc. As shown in FIG. 1, the method for establishing a wireless network connection with an image forming apparatus according to some embodiments of the present disclosure may include the following procedures.

S101: The image forming apparatus obtains an operation instruction for generating configuration information about a wireless network connection.

In S101, the operation instruction may include an instruction for instructing the image forming apparatus to provide services such as printing and copying, etc. The operation instruction may be triggered by a user pressing a designated button or any button of the image forming apparatus, or the operation instruction can be sent to the image forming apparatus by the terminal device of the user. For example, a mobile terminal dials the fax number of a fax machine to instruct the fax machine to get ready for receiving faxing documents. With no operation instruction obtained, the image forming apparatus may be in a stand-by or sleep mode, e.g. deactivating network connection, and turning off screen, etc. to reduce power consumption. Triggered by obtaining any form of operation instructions, the image forming apparatus may be activated from the stand-by or the sleep mode to an operation mode, wait for network connecting with the terminal device of the user to receive data transmitted and perform image processing operations, e.g., printing, copying, faxing and scanning, etc., for the data transmitted. The operation instruction may also include generating configuration information about the wireless network connection. The operation instruction may be triggered by a user pressing a designated button or any button of the image forming apparatus, or the operation instruction can be sent to the image forming apparatus by the terminal device of the user.

S102: The image forming apparatus according to the operation instruction, generates the configuration information including a service set identifier (SSID) and a password of a wireless network; in the process of generating the configuration information, generates activation information of a wireless AP in the image forming apparatus, and activates the AP based on the activation information, such that a terminal device is able to establish the wireless network connection with the image forming apparatus, based on the configuration information.

Further, when the image forming apparatus receives the operation instruction, if data transmission is in process between the image forming apparatus and another terminal device, the AP may be in an activated and communicating status. It is also possible, to reduce power consumption, the AP is in a stand-by status and network connection between the image forming apparatus and the terminal device is disconnected. When receiving the operation instruction triggered by the user, the image forming apparatus may inform the terminal device with the configuration information including the SSID and password for the terminal device to establish the wireless network connection, so that the terminal device can be successfully connected to the image forming apparatus. The image forming apparatus may also inform the terminal device about the activation information about the AP of the image forming apparatus, so as to prompt the terminal device to determine whether the AP of the image forming apparatus is activated, before the network connection. By generating activation information of the AP to prompt the user, a problem in conventional technologies can be effectively avoided. The problem is that when the terminal device attempts to establish the wireless network connection with the image forming apparatus with the wireless network module, the wireless network connection may fail when the AP of the image forming apparatus is deactivated, and the user may mistakenly think that the wireless network module is damaged or cannot realize that the AP of the image forming apparatus needs to be activated until the wireless network connection fails multiple times, causing unnecessary waste of time.

According to embodiments of the present disclosure, the activation information of the AP of the image forming apparatus may be confirmed activation information about whether the AP is activated, generated after the image forming apparatus executed an inspection for the own AP. The activation information may also be prompt information to remind the user the necessity of confirming the activation status of the AP, without any inspection about whether the AP is activated, before the network connection is established between the terminal and the image forming apparatus.

In addition, in the process of generating the configuration information, the reason to generate the activation information of the AP may be that after the image forming apparatus generates the configuration information including the SSID and password of the wireless network connection, if the information page that contains configuration information is left for a long time after the configuration information (e.g., a two-dimensional code (QR code) described below) is printed, the AP of the image forming apparatus may be automatically deactivated to reduce power consumption; or after printed, the configuration information can no longer be associated to the activation status of the AP of the image forming apparatus. Therefore, through generating the information of reminding the user to activate the AP of the image forming apparatus during the process of generating the configuration information, the user can activate the AP in the process of establishing the network connection between the terminal device and the image forming apparatus, so that the wireless network connection can be successfully established after the terminal device attempts to establish wireless network connection with the image forming apparatus. Certainly, if the image forming apparatus includes a panel, the configuration information can be displayed on the panel of the image forming apparatus, and the information of reminding the user to activate the AP can also be added to and displayed by the panel.

According to embodiments of the present disclosure, the method for establishing the wireless network connection with the image forming apparatus includes following procedures. The image forming apparatus obtains the operation instruction for generating configuration information of a wireless network connection. According to the operation instruction, the image forming apparatus generates the configuration information including SSID and the password of the wireless network. During generating the configuration information, the image forming apparatus generates the activation information of the AP. Therefore, after the image forming apparatus activates the AP according to the activation information, the terminal device can establish the wireless network connection with the image forming apparatus according to the configuration information. Through the AP activation information provided by the image forming apparatus, the user may be reminded that the AP in the image forming apparatus needs to be activated to achieve the wireless network connection; the AP of the image forming apparatus with a deactivated AP can be automatically activated; or the activated AP of the image forming apparatus can be kept activated. Thus, the technical solution can be implemented for establishing a wireless network connection with the image forming apparatus whenever the terminal device needs to be wirelessly connected to the image forming apparatus. The power consumption of the image forming apparatus due to the long-term activation of the AP can be reduced, and it is also more convenient for users to use the image forming apparatus.

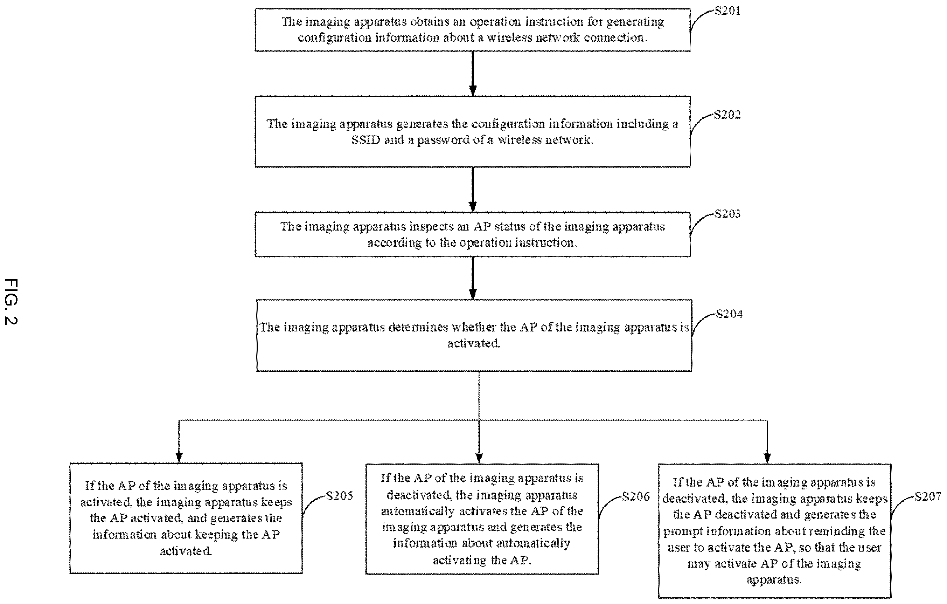

FIG. 2 is a flowchart of a method for establishing a wireless network connection with an image forming apparatus according to another embodiment of the present disclosure. As shown in FIG. 2, based on the above embodiment, the present embodiment provides a method for establishing a wireless network connection with an image forming apparatus including the following procedures.

S201: The image forming apparatus obtains an operation instruction for generating configuration information about a wireless network connection.

S202: The image forming apparatus generates the configuration information including a SSID and a password of a wireless network.

Further, the generated configuration information may include information such as the model of the image forming apparatus, the SSID, the password for network connection, and an encryption method, etc., so that a terminal device of a user can be successfully connected to the AP hot spot of the image forming apparatus according to the configuration information.

S203: The image forming apparatus inspects an AP status of the image forming apparatus according to the operation instruction.

It should be noted that there is no requirement about the sequence for executing 202 and 203, and those skilled in the art can determine the sequence as needed.

In S203, according to the operation instruction, the inspection about the AP status can be initiated, so that the generated activation information about the AP is confirmed information about the AP status. Therefore, based on the information about the AP status obtained by inspection, the user can perform corresponding operations for the AP. For example, the activation information may include: information about the image forming apparatus automatically activating the AP; information about the image forming apparatus keeping the AP activated; and prompt information about reminding the user to activate the AP in the image forming apparatus. If the activation information is the information about the image forming apparatus automatically activating the AP, based on the SSID and the password, the user can directly establish network connection between the terminal device and the image forming apparatus. If the activation information is the information about the image forming apparatus keeping the AP activated, based on the SSID and the password, the user can also directly establish network connection between the terminal device and the image forming apparatus. If the activation information is the prompt information about reminding the user to activate the AP in the image forming apparatus, the user may need to activate the AP of the image forming apparatus, and based on the SSID and the password, the user can establish network connection between the terminal device and the image forming apparatus.

S204: The image forming apparatus determines whether the AP of the image forming apparatus is activated; when the AP of the image forming apparatus is activated, S205 is executed; when the AP of the image forming apparatus is deactivated, S206 or S207 is executed.

Further, there may be two AP statuses, one is that the AP is deactivated, and the other is that the AP is activated. No matter what the AP status is, the AP status can be included in the activation information of AP to inform the user.

S205: When the AP of the image forming apparatus is activated, the image forming apparatus keeps the AP activated, and generates the information about keeping the AP activated.

S206: When the AP of the image forming apparatus is deactivated, the image forming apparatus automatically activates the AP of the image forming apparatus and generates the information about automatically activating the AP.

Below is an application scenario about automatic connection. The image forming apparatus may generate the configuration information each timer the user needs to establish a wireless network connection between the terminal device and the image forming apparatus and display the configuration information by the panel of the image forming apparatus. After the wireless network connection is established, the panel may display information about other statuses (e.g. the terminal device is successfully connected to the image forming apparatus, the image forming apparatus is receiving tasks, or the main interface, etc.). Therefore, each time the user wants to establish the wireless network connection between the terminal device and the image forming apparatus, the image forming apparatus generates the configuration information including the most updated SSID and password. During the process of generating the configuration information, the image forming apparatus generates information about automatically activating the AP or keeping the activated AP in an activation status. Before performing the inspection about status of network connection, the image forming apparatus receives the operation instruction, and the operation instruction clearly indicates that the user needs to use the image forming apparatus, of which, the purpose is clear. Therefore, there is no need to remind the user to manually active the network connection function, and the image forming apparatus can automatically activate the AP, which can make the image forming apparatus more convenient for the user to use.

S207: When the AP of the image forming apparatus is deactivated, the image forming apparatus keeps the AP deactivated and generates the prompt information about reminding the user to activate the AP, so that the user may activate AP of the image forming apparatus.

Below is a specific application scenario for implementing the solution that the user needs to manually trigger the activation of the AP. After the image forming apparatus inspects that the AP is deactivated and informs the user about the deactivation of the AP, the image forming apparatus may wait for the instruction of the user to activate the AP. The image forming apparatus receives the instruction of AP activation triggered by the user, for example, the terminal device of the user sends the information about activating the AP, and the user manually presses the button to activate the AP, etc. The image forming apparatus may active the AP, forming an AP hot point. Therefore, the hot point of the image forming apparatus can be searched by and connected to the terminal device of the user.

Optionally, the configuration information and activation information of whether the AP is activated according to the above embodiments may be displayed in a printed information page in the form of texts or an encrypted QR code; and may also be displayed on the screen of the image forming apparatus in various forms, e.g. a QR code, etc. Further, according to a certain information page template, the configuration information and the activation information can be filled into the information page template to obtain a filled information page. The information page is printed, so that the terminal device can establish the wireless network connection with the image forming apparatus, according to the configuration information and the activation information displayed on the information page. Optionally, the configuration information and the activation information can also be encrypted to generate the QR code including the encrypted configuration information and activation information; and the QR code is displayed to the terminal device, so that through scanning the QR code, the terminal device can obtain the configuration information and the activation information to establish the wireless network connection with the image forming apparatus.

Optionally, the method may further include the following procedures. The image forming apparatus obtains the SSID and the password sent by the terminal. If the SSID and the password sent by the terminal match the SSID and the password, respectively of the image forming apparatus, the image forming apparatus allows the terminal device to establish the wireless network connection with the image forming apparatus.

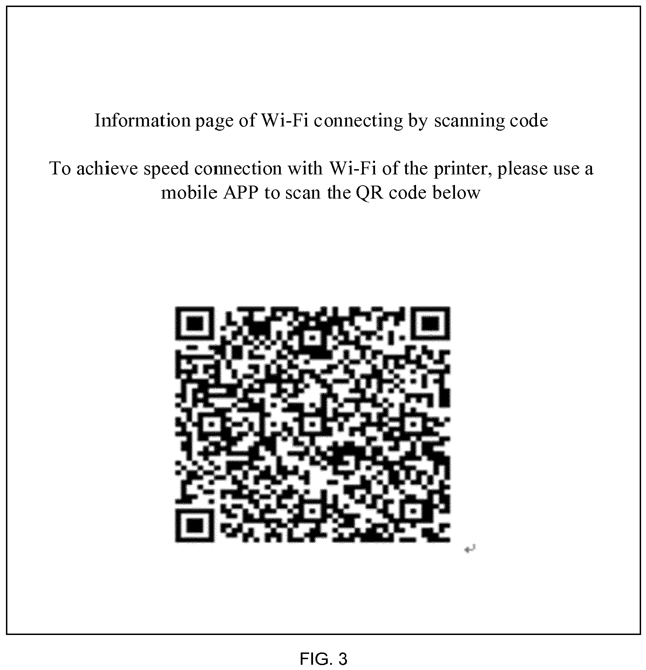

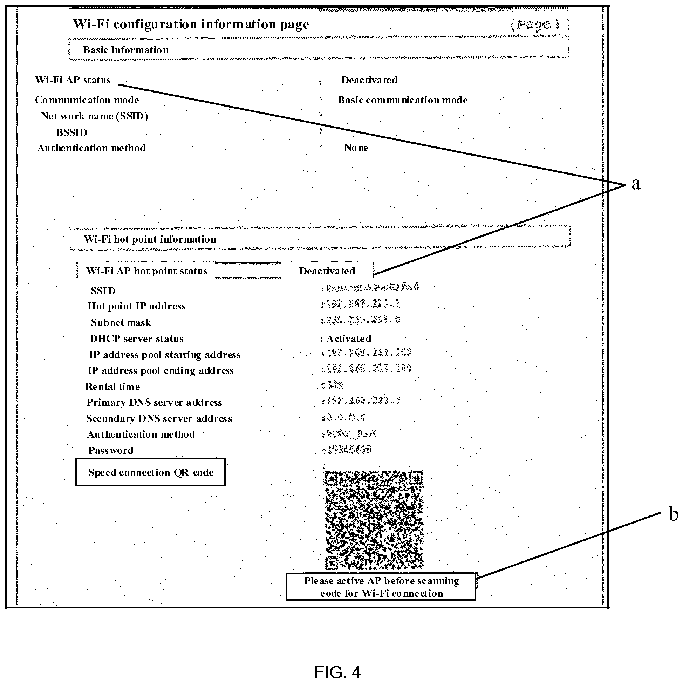

In some embodiments, the above QR code information may be displayed on a screen of the image forming apparatus, and the QR code may also be sent to the terminal device of the user. If the image forming apparatus is a printer, an information page (shown in FIG. 3) including the QR code, can be printed for "Wi-Fi connecting by scanning code", and an information page (shown in FIG. 4) may be printed according to a certain information pager template for Wi-Fi connecting. The information page in FIG .4 shows common information of Wi-Fi and includes the connection status of a Wi-Fi AP (denoted as a) and the prompt information (denoted as b) below the QR code.

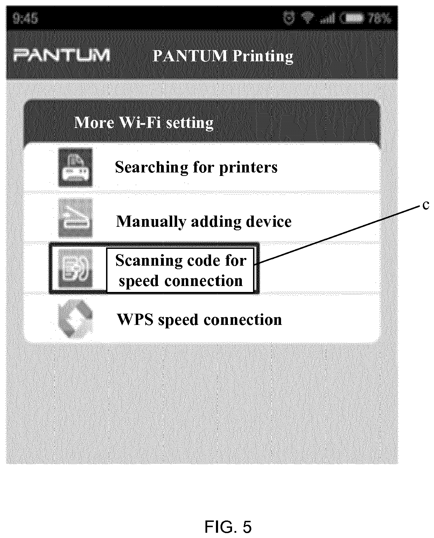

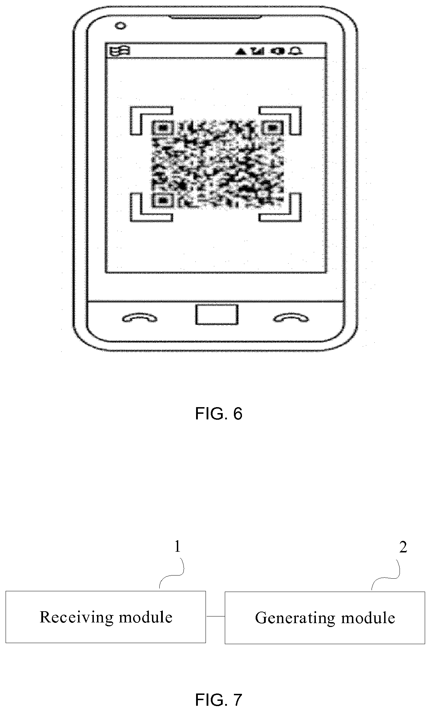

A code scanner may be a mobile phone terminal or other terminal devices. Taking the mobile phone terminal as an example, an application (APP) that matches the image forming apparatus can be installed in the mobile phone. The APP may have multiple functions, one of which may be a function (denoted as c in FIG. 5) of speed connecting by scanning code. When the "scanning code for speed connection" is clicked in the APP, the QR code information can be scanned and decoded by the mobile phone using the own camera function (as shown in FIG. 6). The QR code information and the function of speed connecting by scanning code of the APP are designed by a designated manner in advance. The QR code information may mainly include models of the printer, statuses of the Wi-Fi AP, SSID, passwords, and encryption methods, etc.

The above information may be combined in a certain manner and some key information may be encrypted. After the QR code information is decoded, it can be determined whether the QR code is generated by an image forming apparatus that matches the APP. If not, the user may be immediately reminded to use a printer that matches the scanning code function of the APP to scan the QR code. If yes, the printer may inspect whether the AP status is activated, when the AP is deactivated, and the printer cannot be found through the Wi-Fi scanning of the terminal device, the user may be reminded that the AP of the printer needs to be activated. If the printer is found by Wi-Fi scanning, the decoded SSID and password may be used for AP connection.

According to the above embodiments of the present disclosure, when the QR code for wireless connecting to the printer is generated on the panel of the image forming apparatus, or when the image forming apparatus prints the information page "Wi-Fi connecting by scanning code" to generate the QR code, the image forming apparatus may inspect the status of own AP. When the AP is deactivated, the user may be reminded to activate the AP in the image forming apparatus (in a friendly way). Therefore, not only the problem that the QR code cannot be used to establish network connection can be avoided, but also the user can be reminded that the AP of the image forming apparatus is activated to prevent the user from accidentally activating the AP. When QR code is printed together with the Wi-Fi configuration information, the user can directly observe the Wi-Fi configuration information of the image forming apparatus and use the APP of "Wi-Fi connecting by scanning code" to quickly establish the network connection. When the AP is inspected as deactivated, the information page about Wi-Fi configuration information may friendly remind the user to activate the AP before attempting to connect to Wi-Fi by scanning code, so that the problem that the QR code cannot be used to establish network connection can be avoided.

FIG. 7 is a schematic structural diagram of an image forming apparatus according to an embodiment of the present disclosure. As shown in FIG. 7, the image forming apparatus includes a receiving module 1 and a generating module 2.

The receiving module 1 is configured to obtain an operation instruction for generating configuration information about a wireless network connection. The generating module 2 is configured to generate the configuration information including a SSID and a password of a wireless network according to the operation instruction; in the process of generating the configuration information, also generate activation information of a wireless AP in the image forming apparatus. Therefore, after the image forming apparatus activates the AP based on the activation information, a terminal device, based on the configuration information, can establish the wireless network connection with the image forming apparatus.

The implementation principle of embodiment below about the apparatus is similar to the implementation principle of embodiments about the above method shown in FIG. 1 and is not repeated here.

The image forming apparatus provided by this embodiment can implement the following procedures. The image forming apparatus obtains the operation instruction for generating configuration information of a wireless network connection. According to the operation instruction, the image forming apparatus generates the configuration information including SSID and the password of the wireless network. In the process of generating the configuration information, the image forming apparatus generates the activation information of the AP. Therefore, after the image forming apparatus activates the AP according to the activation information, the terminal device can establish the wireless network connection with the image forming apparatus according to the configuration information. Through the AP activation information provided by the image forming apparatus, the user may be reminded to activate the AP in the image forming apparatus to achieve the wireless network connection; the AP of the image forming apparatus with a deactivated AP can be automatically activated; or the activated AP of the image forming apparatus can be kept activated. Thus, the technical solution can be implemented for establishing a wireless network connection with the image forming apparatus whenever the terminal device needs to be wirelessly connected to the image forming apparatus is used. The power consumption of the image forming apparatus due to the long-term activation of the AP can be reduced, and it is also more convenient for users to use the image forming apparatus.

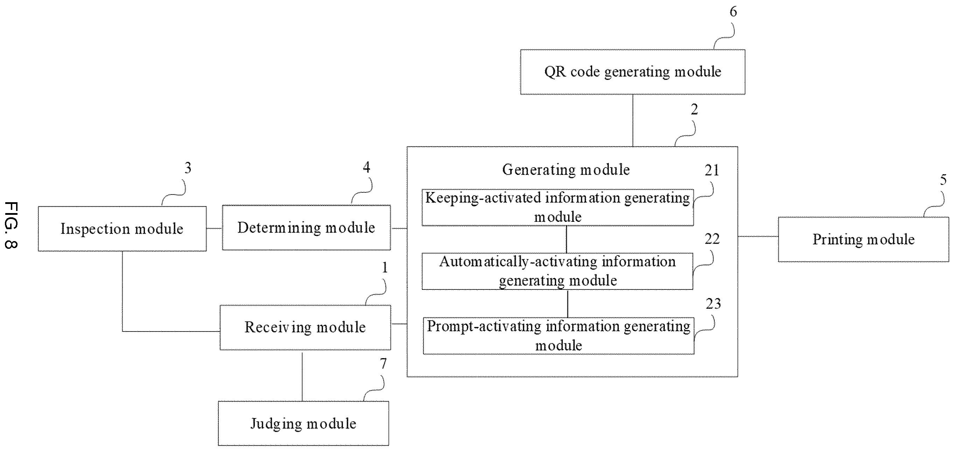

FIG. 8 is a schematic structural diagram of an image forming apparatus according to another embodiment of the present disclosure. As shown in FIG. 8, on the basis of the above embodiments, the activation information may optionally include one of the information about the image forming apparatus automatically activating the AP, the information about the image forming apparatus keeping the AP activate and the prompt information about reminding the user to activate the AP in the image forming apparatus.

Optionally, the apparatus may further include an inspection module 3 and a determining module 4. The inspection module 3 is configured to inspect an AP status of the image forming apparatus according to the operation instruction. The determining module 4 is configured to determine whether the AP of the image forming apparatus is activated.

Correspondingly, the generating module 2 may include a keeping-activated information generating module 21, an automatically-activating information generating module 22 and a prompt-activating information generating module 23. The keeping-activated information generating module 21 is configured to when the AP of the image forming apparatus is activated, keep the AP activated, and generate the information about keeping the AP activated. The automatically-activating information generating module 22 is configured to automatically activate the AP of the image forming apparatus when the AP of the image forming apparatus is not deactivated, and generate the information about automatically activating the AP. The prompt-activating information generating module 23 is configured to when the AP of the image forming apparatus is deactivated, keep the AP deactivated and generate the prompt information about reminding the user to activate the AP, so that the user may activate AP of the image forming apparatus.

Optionally, the apparatus may further include one or more of a printing module 5 and a QR code generating module 6. The printing module 5 is configured to according to a certain information page template, fill the configuration information and the activation information into the information page template to obtain a filled information page; and print the information page, such that a terminal device can establish the wireless network connection with the image forming apparatus, according to the configuration information and the activation information displayed on the information page. The QR code generating module 6 is configured to encrypt the configuration information and the activation information, generate a QR code including the encrypted configuration information and the activation information; and display the QR code to the terminal, so that through scanning the QR code, the terminal device can obtain the configuration information and the activation information to establish the wireless network connection with the image forming apparatus.

Optionally, the apparatus may further include a judging module 7. The judging module 7 is configured to obtain an SSID and a password sent by the terminal, and if the SSID and the password sent by the terminal match the SSID and the password, respectively of the image forming apparatus, allowing the terminal device to establish the wireless network connection with the image forming apparatus.

The implementation principle of the following embodiment is similar to the implementation principle of the embodiments about the above method shown in FIG. 2 and is not repeated here.

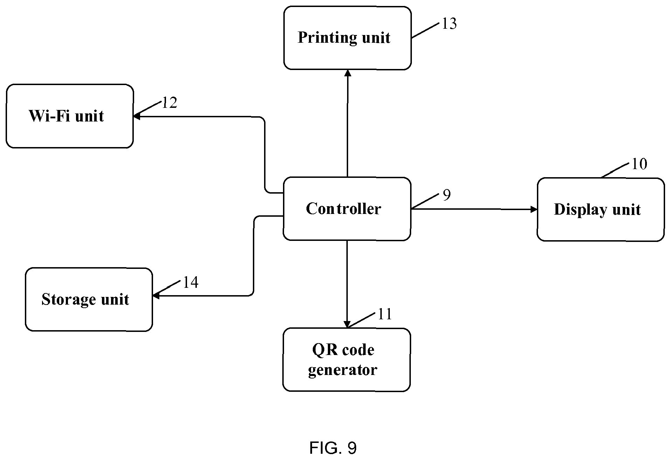

FIG. 9 is a schematic structural diagram of an image forming apparatus according to another embodiment of the present disclosure. As shown in FIG. 9, the image forming apparatus may specifically include a controller 9, a display unit 10, a QR code generator 11, a Wi-Fi unit 12, a printing unit 13, and a storage unit 14. The controller 9 is configured to work as a CPU of the image forming apparatus. The display unit 10, e.g. a screen of the image forming apparatus, is configured to not only work as a human-machine interaction interface but also display the generated QR code and other prompt information.

The QR code generator 11 is configured to generate the QR code. Further, when the Wi-Fi configuration information page of or information page for connecting Wi-Fi by scanning code is printed, or the QR code for connecting Wi-Fi by scanning code is displayed on the screen, the controller 9 may collect the information including the activation status of the AP of the Wi-Fi unit 12, the password for network connection, and the encryption method of QR code, etc. The controller 9 may group and encrypt the above information using a specific method and call the QR code generator 11 to generate the QR code. The QR code may be printed by the printing unit 13. The storage unit 14 may be ROM and RAM. Execution programs for implementing any of the above method embodiments can be stored in the ROM, while the information including printing tasks and QR code information, etc. may be stored in the RAM. The Wi-Fi unit 12 can be configured to communicate with other terminal devices of the user through Wi-Fi.

Through the above embodiments of the present disclosure, the QR code for wireless connecting to the printer can be generated on a panel of the image forming apparatus. Optionally, when the image forming apparatus printing the information page for "Wi-Fi connecting to by scanning code" to generate the QR code, the image forming apparatus may inform the user about the activation information of the AP and the activation information can be obtained by image forming apparatus inspecting the status of the AP. The activation information can also remind the user to activate the AP before attempting to establish the wireless network connection without inspection. When the AP is deactivated, the user may be reminded that the AP in the image forming apparatus needs to be activated (in a friendly way). Therefore, not only the problem that the QR code cannot be used to establish network connection can be avoided, but also the user can be reminded that the AP of the image forming apparatus is activated to prevent the user from accidentally activating the AP. When QR code is printed together with the Wi-Fi configuration information, the user can directly observe the Wi-Fi configuration information of the image forming apparatus and use the APP of "Wi-Fi connecting by scanning code" to quickly establish the network connection. When the AP is inspected as deactivated, the information page about Wi-Fi configuration information may friendly remind the user to activate the AP before attempting to connect to Wi-Fi by scanning code, so that the problem that the QR code cannot be used to establish network connection can be avoided.

Finally, it should be noted that the above embodiments are only used to illustrate rather than limit the technical solutions of the present disclosure. Although the present disclosure has been described in detail with reference to the above embodiments, those skilled in the art should understand it is possible to modify the technical solutions described in the above embodiments or equivalently replace some of the technical features and these modifications or replacements do not depart from the scope of the technical solutions according to embodiments of the present disclosure.

## Claims

1. A method for establishing a wireless network connection with an image forming apparatus, comprising:
obtaining, by the image forming apparatus, an operation instruction for generating configuration information about a wireless network connection;
according to the operation instruction, generating, by the image forming apparatus, the configuration information including a service set identifier (SSID) and a password of a wireless network;
in the process of generating the configuration information, generating, by the image forming apparatus, activation information of a wireless access point (AP) in the image forming apparatus; and
activating, by the image forming apparatus, the AP based on the activation information, such that a terminal device is able to establish, based on the configuration information, the wireless network connection with the image forming apparatus.

2. The method according to claim 1, wherein the activation information comprises one of:
information about the image forming apparatus automatically activating the AP;
information about the image forming apparatus keeping the AP activated; and
prompt information about reminding the user to activate the AP in the image forming apparatus.

3. The method according to claim 2, wherein:
after obtaining the operation instruction for generating the configuration information about the wireless network connection, the method further comprises:
inspecting AP statuses of the image forming apparatus, according to the operation instruction; and
determining whether the AP of the image forming apparatus is activated;
the generating activation information of a wireless AP in the image forming apparatus comprises:
when the AP of the image forming apparatus is activated, keeping the AP activated, and generating the information about the image forming apparatus keeping the AP activated; and
when the AP of the image forming apparatus is deactivated, activating the AP of the image forming apparatus automatically and generating the information about automatically activating the AP; or keeping the AP deactivated and generating the prompt information about reminding the user to activate the AP, so that the user activate AP of the image forming apparatus.

4. The method according to any one of claims 1, further comprising one or more of:
filling, according to a certain information page template, the configuration information and the activation information into the information page template to obtain a filled information page;
printing the information page, so that the terminal device establishes the wireless network connection with the image forming apparatus, according to the configuration information and the activation information displayed on the information page; and
encrypting the configuration information and the activation information, and generating a two-dimensional barcode (QR code) including the encrypted configuration information and activation information; and displaying the QR code to the terminal device to establish the wireless network connection with the image forming apparatus, so that through scanning the QR code, the terminal device obtains the configuration information and the activation information and establishes the wireless network connection with the image forming apparatus.

5. The method according to claim 4, further comprising:
obtaining the SSID and the password sent by the terminal; and
when the SSID and the password sent by the terminal match the SSID and the password of the image forming apparatus, allowing the terminal device to establish the wireless network connection with the image forming apparatus.

6. An image forming apparatus, comprising:
a receiving module, configured to obtain an operation instruction for generating configuration information about a wireless network connection;
a generating module, configured to generate the configuration information including a SSID and a password of a wireless network according to the operation instruction and in the process of generating the configuration information, generate activation information of a wireless AP in the image forming apparatus, such that after the image forming apparatus activates the AP based on the activation information, a terminal device is able to establish a wireless network connection with the image forming apparatus, based on the configuration information.

7. The apparatus according to claim 6, wherein the activation information comprises one of:
information about the image forming apparatus automatically activating the AP;
information about the image forming apparatus keeping the AP activate; and
prompt information about reminding the user to activate the AP in the image forming apparatus.

8. The apparatus according to claim 7, further comprising:
an inspection module, configured to inspect AP statuses of the image forming apparatus according to the operation instruction; and
a determining module, configured to determine whether the AP of the image forming apparatus is activated;
the generating module comprises:
a keeping-activated information generating module, configured to when the AP of the image forming apparatus is activated, keep the AP activated, and generate the information about the image forming apparatus keeping the AP activated;
an automatically-activating information generating module, configured to automatically activate the AP of the image forming apparatus when the AP of the image forming apparatus is deactivated, and generate the information about automatically activating the AP; and
a prompt-activating information generating module, configured to when the AP of the image forming apparatus is deactivated, keep the AP deactivated and generate the prompt information about reminding the user to activate the AP, so that the user activate AP of the image forming apparatus.

9. The apparatus according to any of claims 6, further comprising:
a printing module, configured to according to a certain information page template, fill the configuration information and the activation information into the information page template to obtain a filled information page; and print the information page, so that a terminal device establishes the wireless network connection with the image forming apparatus, according to the configuration information and the activation information displayed on the information page; and/ or
a QR code generating module, configured to encrypt the configuration information and the activation information, generate a QR code including the encrypted configuration information and the activation information; and display the QR code to the terminal device to establish the wireless network connection with the image forming apparatus, so that through scanning the QR code, the terminal device obtains the configuration information and the activation information, and establishes the wireless network connection with the image forming apparatus.

10. The apparatus according to claim 9, further comprising:
a judging module, configured to obtain an SSID and a password sent by the terminal device, and if the SSID and the password sent by the terminal device match the SSID and the password of the image forming apparatus, allowing the terminal device to establish the wireless network connection with the image forming apparatus.
